# EUROPEAN PATENT APPLICATION

(11) **EP 1 975 767 A2**
(43) Date of publication of application: **01.10.2008**
(21) Application number: 08005984.3
(22) Date of filing: 28.03.2008
(51) Int. Cl.: G06F 3/048

(54) **Touch panel apparatus**

(30) Priority: 29.03.2007 JP 2007086666
(71) Applicant: Sanyo Electric Co., Ltd., Osaka 570-8677 (JP)
(72) Inventor: Hisada, Ikunori, Shijonawate-shi Osaka (JP); Otani, Kinya, Shijonawate-shi Osaka (JP); Taguchi, Yuta, Hirakata-shi Osaka (JP)
(74) Representative: TER MEER - STEINMEISTER & PARTNER GbR

(57) **Abstract**

In a touch panel apparatus of the present invention, a plurality of operation buttons 61-69 on an operation screen 51 are divided into a plurality of groups. One or more operation buttons 61-69 belonging to one of the groups are shown in a first size, and one or more operation buttons 61-69 belonging to the other groups are shown in a second size that is smaller than the first size. On the operation screen 51, a button size modification area 71-73 is shown for each group in which the one or more operation buttons 61-69 belonging to the group are shown in the second size. When one of the button size modification areas 71-73 is selected, the operation screen 51 is modified such that the one or more operation buttons 61-69 belonging to the group corresponding to the selected button size modification area 71-73 will be shown in the first size, and the one or more operation buttons 61-69 shown in the first size will be shown in the second size.

## Description

### BACKGROUND OF THE INVENTION

### 1. Field of the Invention

The present invention relates to an electronic device such as a navigation apparatus or the like having a graphical user interface (GUI) that uses a touch panel.

### 2. Description of the Related Art

GUIs using a touch panel are widely utilized in electronic devices such as navigation apparatuses, personal digital assistants (PDAs), copiers and the like. With such electronic devices, an operation screen on which a plurality of operation buttons are drawn is displayed on a display apparatus such as a liquid crystal display (LCD) monitor or the like, and the operation buttons are selected by a user via a touch panel disposed on a display area of the display apparatus.

As electronic devices become more multifunctional, the number of operation buttons needed to operate the devices increases, making it necessary to display a large number of operation buttons on the display apparatus. Decreasing the display size of the operation buttons to display a large number of operation buttons on a single operation screen makes it difficult to visually distinguish individual buttons, and increases the incidence of the wrong button being pressed. Thus, with electronic devices having a GUI, the operation buttons are often displayed on the display apparatus in hierarchical form. There are also electronic devices in which operation buttons pressed more often are larger than operation buttons not pressed very often.

As the number of operation buttons increases, the number of operation screens displaying operation buttons also increases, even when the operation buttons are displayed in hierarchical form. To display the lowest ranked operation buttons on the display apparatus thus requires operations to sequentially display numerous operation screens. Also, when the display size differs according to the frequency with which the operation buttons are pressed, it takes time to identify desired operation buttons that are displayed in small size.

In recent years, GUIs are even being employed in small electronic devices such as PDAs and portable navigation apparatuses. With such electronic devices, these problems become more noticeable when the above methods are applied directly, given that the display area of the display apparatus is inevitably smaller. Hence, with small electronic devices having a GUI, innovating the operation screen to improve operability is an extremely important task.

The present invention provides an electronic device that does not require display of operation buttons to be highly hierarchized in the case where there is a large number of operation buttons, and that is able to immediately display desired operation buttons in large size in the case where the display size of the operation buttons differs. Further, the present invention gives rise to a GUI with superior operability in an electronic device that has a display apparatus with a relatively small display area.

### SUMMARY OF THE INVENTION

In a touch panel apparatus of the present invention for displaying an operation screen that includes a plurality of operation buttons and specifying a selected operation button using a touch panel, the plurality of operation buttons are divided into a plurality of groups, on the operation screen, one or more operation buttons belonging to one of the groups are shown in a first size, one or more operation buttons belonging to the other groups are shown in a second size that is smaller than the first size, and a button size modification area is shown for each group in which the one or more operation buttons belonging to the group are shown in the second size, and when one of the button size modification areas is selected, the operation screen is displayed after being modified such that the one or more operation buttons belonging to the group corresponding to the selected button size modification area will be shown in the first size and the one or more operation buttons shown in the first size will be shown in the second size.

A touch panel apparatus of the present invention includes a draw unit that creates image data for an operation screen that includes a plurality of operation buttons, a display unit that displays the operation screen using the image data, and a control unit that specifies a selected operation button using a touch panel, and executes an operation corresponding to the selected operation button. The plurality of operation buttons are divided into a plurality of groups, on the operation screen, one or more operation buttons belonging to one of the groups are shown in a first size, one or more operation buttons belonging to the other groups are shown in a second size that is smaller than the first size, and a button size modification area is shown for each group in which the one or more operation buttons belonging to the group are shown in the second size, and when one of the button size modification areas is selected, the control unit instructs the draw unit to modify the image data, and the draw unit modifies the image data such that the one or more operation buttons belonging to the group corresponding to the selected button size modification area will be shown in the first size, and the one or more operation buttons shown in the first size will be shown in the second size.

In a touch panel apparatus of the present invention for displaying an operation screen that includes a plurality of operation buttons and specifying a selected operation button using a touch panel, the plurality of operation buttons are divided into a plurality of groups, one or more hardware keys are included for designating one of the plurality of groups, on the operation screen, one or more operation buttons belonging to one of the groups are shown in a first size, and one or more operation buttons belonging to the other groups are shown in a second size that is smaller than the first size, and when one of the one or more hardware keys is pressed and one of the groups in which the one or more operation buttons are shown in the second size is designated, the operation screen is displayed after being modified such that the one or more operation buttons belonging to the designated group will be shown in the first size, and the one or more operation buttons shown in the first size will be shown in the second size.

An operation button display method of the present invention in an electronic device for displaying an operation screen that includes a plurality of operation buttons and specifying a selected operation button using a touch panel, includes a step of displaying an operation screen on which the plurality of operation buttons are divided into a plurality of groups, one or more operation buttons belonging to one of the groups are shown in a first size, one or more operation buttons belonging to the other groups are shown in a second size that is smaller than the first size, and a button size modification area is shown for each group in which the one or more operation buttons belonging to the group are shown in the second size, and a step of modifying the operation screen, when one of the button size modification areas is selected, such that the one or more operation buttons belonging to the group corresponding to the selected button size modification area will be shown in the first size, and the one or more operation buttons shown in the first size will be shown in the second size.

In the present invention, an arrangement of the plurality of operation buttons is the same irrespective of size. Also, when any of the plurality of operation buttons is selected, an operation corresponding to the selected operation button is performed irrespective of the size of the selected operation button.

The present invention enables a large number of operation buttons to be included on a single operation screen as a result of a plurality of operation buttons being shown in large and small sizes on an operation screen, thereby suppressing high hierarchization of operation buttons (or operation screens). Further, in the present invention, the user of the touch panel, by selecting a button size modification area, is able to easily change the operation buttons to the large size and select a desired operation button without pressing the wrong button. Also, in the present invention, the user is able quickly locate a desired operation button, since the display size of operation buttons is modified in groups.

As a result of the plurality of operation buttons being arranged in the same way irrespective of display size, the user of the touch panel apparatus or an electronic device provided with the touch panel will become able to grasp the classification of the various operation buttons merely from the simple positional relation of these operation buttons as he or she becomes familiar with operating the operation screen. As a result of the operation corresponding to a selected operation button being performed irrespective of display size, a user who is proficient at operating the operation screen will be able quickly execute a desired operation on the touch panel apparatus or electronic device without changing the display size of the operation buttons.

The present invention is extremely effective in the case where the display area of a display apparatus is small, because a large number of operation buttons can be display on an operation screen without sacrificing operability.

### BRIEF DESCRIPTION OF THE DRAWINGS

FIG. 1 is a block diagram showing an overview of a navigation apparatus constituting a first embodiment of the present invention.
FIGS. 2A to 2C are illustrative views showing an operation screen displayed on the navigation apparatus of the first embodiment, each of which shows a different state of the operation screen.
FIG. 3 is an illustrative view showing a guidance screen displayed on the navigation apparatus of the first embodiment.
FIG. 4 is a flowchart showing an operation to display an operation screen in the navigation apparatus of the first embodiment.
FIG. 5 is an illustrative view showing an operation screen displayed on the navigation apparatus of a second embodiment of the present invention.
FIG. 6A is a front elevation view of the navigation apparatus of a third embodiment of the present invention, and FIG. 6B is a front elevation view of the navigation apparatus of a fourth embodiment of the present invention.
FIG. 7 is a flowchart showing a display operation of an operation screen in the navigation apparatus of the third embodiment.

### DESCRIPTION OF THE PREFERRED EMBODIMENTS

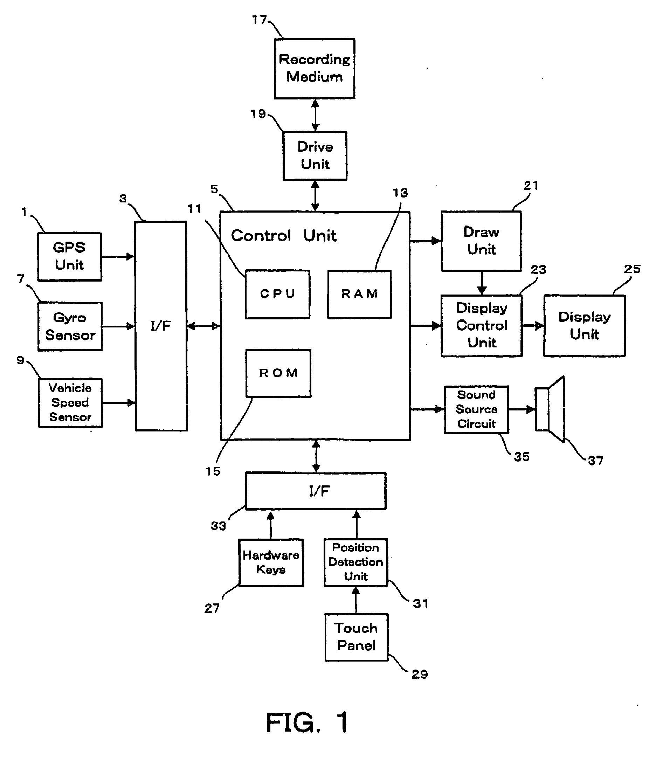

Hereinafter, the present invention will be described using the diagrams. FIG. 1 is a block diagram showing an overview of a navigation apparatus constituting an embodiment of a touch panel apparatus of the present invention. The navigation apparatus is mounted on a vehicle, and primarily functions to guide the vehicle along a guidance route by specifying a position of the vehicle based on radio waves received from a global positioning system (GPS) satellite, and displaying a guidance image showing the vehicle position and a map of a vicinity of the current position.

A GPS unit (1) is constituted by a reception antenna, a tuner and the like, and radio waves received from the GPS satellite are processed and extracted as positioning data. The extracted positioning data is sent to a control unit (5) via an interface (3). The control unit (5) is constituted by a microcomputer, for example, and specifies a current position of the vehicle based on the positioning data sent from the GPS unit (1). The navigation apparatus is provided with a gyro sensor (7) for detecting the direction of travel of the vehicle, and a vehicle speed sensor (9) for detecting the speed of the vehicle. Based on signals from these sensors (7) and (9) sent via the interface (3), the control unit (5) specifies the direction of travel and speed of the vehicle. In the case of a portable navigation apparatus, the control unit (5) may calculate the direction of travel and speed of the vehicle based on the specified current position of the vehicle, without the gyro sensor (7) and the vehicle speed sensor (9) being provided.

The control unit (5) performs overall control of the navigation apparatus, and executes various operations and processing such as specifying vehicle position and searching for routes. The control unit (5) is constituted by a microcomputer, for example, and includes a CPU (11) that executes various computer programs defining control and operational procedures, a RAM (13) that temporarily stores data for use by the CPU (11) and programs read out from a recording medium (17) for execution by the CPU (11), and a ROM (15) that stores font data, and programs defining basic controls related to startup, input/output, and the like. The CPU (11) and other constituent elements are connected via a bus (not shown).

The recording medium (17) stores a map database that is referenced when executing guidance image display, route searches or the like, and a computer program defining the various operations of the navigation apparatus. The control unit (5) reads out this program from the recording medium (17) via a drive unit (19) and executes the read program. The map database has map data that includes information on roads, facilities, background and the like, draw parameters referenced when drawing a map or a guidance image based on map data, index data referenced in various searches, and audio data used in generating audio for route guidance and other applications. The control unit (5) partially extracts data required in executing operations from the map database and refers to the extracted data. A hard disk, memory card, DVD or the like is used for the recording medium (17).

A draw unit (21) is an IC chip that includes a CPU dedicated to drawing, and others, and creates image data for a guidance screen, an operation screen (described below) and the like, based on instructions from the control unit (5). Image data created by the draw unit (21) is sent to a display control unit (23), and stored in a RAM of the display control unit (23). The display control unit (23) sends a signal for image display to a display unit (25) based on stored image data, and an image related to the image data is displayed in a display area of the display unit (25). An LCD, organic EL display or the like is used for the display unit (25).

The navigation apparatus is provided with hardware keys (27) and a touch panel (29) as operation means. The hardware keys (27) include a power key for turning power on/off, a volume key, and the like. When one of the keys constituting the hardware keys (27) is pressed, a signal notifying that the key has been pressed is sent to the control unit (5) via an interface (33). The touch panel (29) is a pressure-sensitive touch panel that has transparent electrodes disposed in a grid, for example, and is placed on the display area of the display unit (25). When the touch panel (29) is pressed, a position detection unit (31) generates a signal notifying the coordinate information of the pressed position, based on a voltage signal sent from the touch panel (29). This signal is sent to the control unit (5) via the interface (33).

A sound source circuit (35) generates an analog audio signal for use in route guidance and other applications, based on audio data send from the control unit (5). The generated analog audio signal is reproduced by a speaker (37).

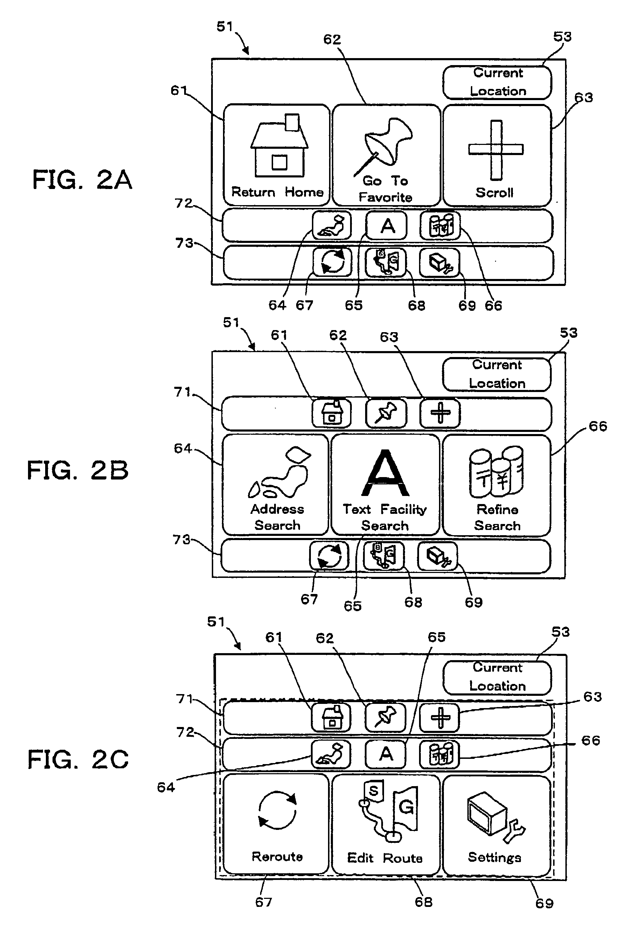

FIGS. 2A to 2C are illustrative diagrams of an operation screen (51) displayed on the display unit (25) of the navigation apparatus of the present embodiment. This operation screen (51) is a menu screen for instructing execution of the various operations of the navigation apparatus. By pressing one of nine substantially square operation buttons (61-69) shown on the operation screen (51), an operation corresponding to the selected operation button is executed by the navigation apparatus. In the upper right of the operation screen (51) is also shown an operation button (53) for instructing display of a map that shows the current position of the vehicle. The state of the operation screen (51) changes as will be described below, with FIGS. 2A to 2C each showing a different state of the operation screen (51).

On the operation screen (51), the nine operation buttons (61-69) are divided into three groups composed of a top row, a middle row, and a bottom row, with the operation buttons in each group being disposed horizontally. The top group is constituted by a first button (61) for instructing a guidance or navigation operation with home as the destination, a second button (62) for instructing display of a selection screen for selecting a destination set as a favorite location, and a third button (63) for instructing scroll display of a map of the periphery of the current location.

The middle group is constituted by a fourth button (64) for instructing display of a search screen for inputting all or part of the address of the destination, a fifth button (65) for instructing display of a search screen for inputting all or part of the name of a facility to set as the destination using alphabet characters, and a sixth button (66) for instructing display of a search screen for inputting another keyword related to the destination.

The bottom group is constituted by a seventh button (67) for instructing that a search for a route to the destination be performed again in the case where the vehicle has deviated from the guidance route, an eighth button (68) for instructing display of an editing screen for editing the guidance route, and a ninth button (69) for instructing display of a setting screen for performing various settings on the navigation apparatus.

There are two display sizes of the operation buttons (61-69), large and small, with the operation buttons belonging to one of the groups being displayed larger than the operation buttons belonging to the other groups. In the state shown in FIG. 2A, the display size of the first to third buttons (61-63) belonging to the top group are shown larger than the display size of the operation buttons (64-69) belonging to the other groups. In the state shown in FIG. 2B, the display size of the fourth to sixth buttons (64-66) belonging to the middle group are shown larger than the display size of the operation buttons (61-63) and (67-69) belonging to the other groups. In the state shown in FIG. 2C, the display size of the seventh to ninth buttons (67-69) belonging to the bottom group are shown larger than the display size of the operation buttons (61-66) belonging to the other groups. When shown in large size, the three operation buttons in the group are drawn side-by-side from near the left edge to near the right edge of the operation screen (51), with a slight gap opened up therebetween.

On the operation screen (51), horizontally long, band-like button size modification areas (71-73) are drawn from near the left edge to near the right edge of the operation screen (51), in correspondence with each of the groups in which the operation buttons are shown in small size, and in the button size modification areas (71-73), the three operation buttons belonging to the respective groups are drawn in small size. In the state shown in FIG. 2A, the button size modification area (72) corresponding to the middle group and the button size modification area (73) corresponding to the bottom group are drawn on the operation screen (51), and the fourth to sixth buttons (64-66) are drawn side-by-side in proximity to the center of the button size modification area (72) with an approximately half button width interval opened up therebetween. The seventh to ninth buttons (67-69) are also similarly drawn in proximity to the center of the button size modification area (73).

In the state shown in FIG. 2B, the button size modification area (71) corresponding to the top group and the button size modification area (73) corresponding to the bottom group are drawn on the operation screen (51), and the operation buttons (61-63) and (67-69) of the top and bottom groups are respectively drawn in small size in the center of these button size modification areas (71) and (73). In the state shown in FIG. 2C, the button size modification area (71) corresponding to the top group and the button size modification area (72) corresponding to the middle group are drawn on the operation screen (51), and the operation buttons (61-63) and (64-66) of the top and middle groups are respectively drawn in small size in the center of these button size modification areas (71) and (72).

When one of the button size modification areas (71-73) is pressed, the operation buttons shown in large size on the operation screen (51) are modified to small operation buttons, and the small operation buttons drawn in the pressed button size modification area are modified to large operation buttons. When the button size modification area (72) corresponding to the middle group is pressed in the state shown in FIG. 2A, the operation screen (51) changes to the state shown in FIG. 2B, and when the button size modification area (73) corresponding to the bottom group is pressed in the state shown in FIG. 2A, the operation screen (51) changes to the state shown in FIG. 2C. When the button size modification area (71) corresponding to the top group is pressed in the state shown in FIG. 2B, the operation screen (51) changes to the state shown in FIG. 2A, and when the button size modification area (73) corresponding to the bottom group is pressed in the state shown in FIG. 2B, the operation screen (51) changes to the state shown in FIG. 2C. When the button size modification area (71) corresponding to the top group is pressed in the state shown in FIG. 2C, the operation screen (51) changes to the state shown in FIG. 2A, and when the button size modification area (72) corresponding to the middle group is pressed in the state shown in FIG. 2C, the operation screen (51) changes to the state shown in FIG. 2B.

The operation buttons that were shown in large size are modified to small operation buttons, and the small operation buttons drawn in the pressed button size modification area are modified to large operation buttons. As a result, there is no change, as a whole, to the area occupied on the operation screen (51) by the operation buttons (61-69) and the button size modification areas (71-73) in the states of FIGS. 2A to 2C. That is, in any of states shown in FIGS. 2A to 2C, the operation buttons (61-69) and the button size modification areas (71-73) occupy a fixed range (shown by broken lines in FIG. 2C) below the operation button (53) for instructing display of a map of the current location, and do not deviate from this area.

The arrangement (placement order) of the first to ninth buttons (61-69) on the operation screen (51) does not change, irrespective of display size. That is, in FIGS. 2A to 2C, the first to third buttons (61-63) are arranged horizontally from left to right, the fourth to sixth buttons (64-66) are arranged horizontally from left to right below the first to third buttons (61-63), and the seventh to ninth buttons (67-69) are arranged horizontally from left to right below the fourth to sixth buttons (64-66).

Effective coordinate areas of the touch panel (29) corresponding to the draw area of each of the operation buttons (61-69) and the button size modification areas (71-73) (and also the operation button (53)) are set in the control unit (5), for each of the states shown in FIGS. 2A to 2C. When the touch panel (29) is pressed in a state where the operation screen (51) is displayed on the display unit (25), a signal that includes the coordinate information of the pressed position is sent from the position detection unit (31) to the control unit (5) via the interface (33). The control unit (5) stores which of the states shown in FIGS. 2A to 2C the operation screen (51) is in, and determines whether an operation on the touch panel (29) is valid or invalid based on the settings of the effective coordinate areas corresponding to the state of the operation screen (51), and further determines the operation button (61-69) or the button size modification area (71-73) selected as a result of the touch panel (29) being pressed. When one of the button size modification areas (71-73) is pressed, the control unit (5) instructs the draw unit (21) to generate image data for the modified operation screen (51).

With the navigation apparatus of the present embodiment, the design of the first to ninth buttons (61-69) differs slightly depending on display size. When shown in large size, pictures intuitively showing the operations that will be selected or executed by pressing the first to ninth buttons (61-69) and character strings succinctly defining these operations are added to the substantially square areas representing these buttons (61-69). For example, in the case where the first button (61) is shown in large size, a picture of a house that intuitively shows the performance of a guidance operation with home as the destination, and a character string saying "Return Home" that succinctly defines the operation are attached thereto, as shown in FIG. 2A. When shown in small size, only the pictures are shown in the substantially square areas representing the first to ninth buttons (61-69) because of the difficulty in reading character strings even if they were drawn. For example, if the case where the first button (61) is shown in small size, only the picture of a house is attached thereto, as shown in FIGS. 2B and 2C.

With the navigation apparatus of the present embodiment, the user, by pressing the button size modification areas (71-73), is able to change the operation buttons (61-69) to the large size and reliably select a desired button without pressing the wrong button, even though a large number of operation buttons (61-69) are shown on the operation screen (51). The operability of the operation buttons (61-69) is not adversely affected, even though many operation buttons (61-69) are provided on the operation screen (51). Also, a user who has not sufficiently grasped the positioning of individual operation buttons (61-69) is able to change the operation buttons (61-69) to the large size and easily locate a desired operation button by pressing the button size modification areas (71-73).

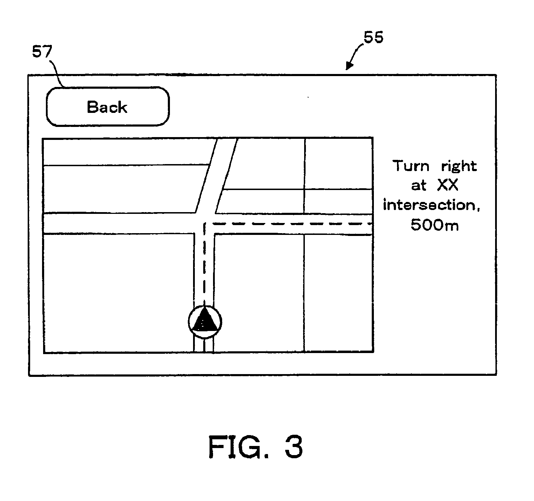

With the navigation apparatus of the present embodiment, when one of the operation buttons (61-69) is pressed irrespective of display size, the control unit (5) controls the navigation apparatus to execute the operation corresponding to the selected operation button. For example, when the large first button (61) is pressed in the state shown in FIG. 2A, a route search from the current position to home is performed and a guidance image (55) as shown in FIG. 3 is displayed. Even if the small first button (61) is selected in the states shown in FIGS. 2B and 2C, a route search is similarly performed and the guidance image (55) as shown in FIG. 3 is displayed. Although it is possible to invalidate the first to ninth buttons (61-69) when shown in small size, constituting the operation buttons as shown in the present embodiment enables a user who has sufficiently memorized the arrangement of the first to ninth buttons (61-69) to press the desired button directly without needing to modify the display size.

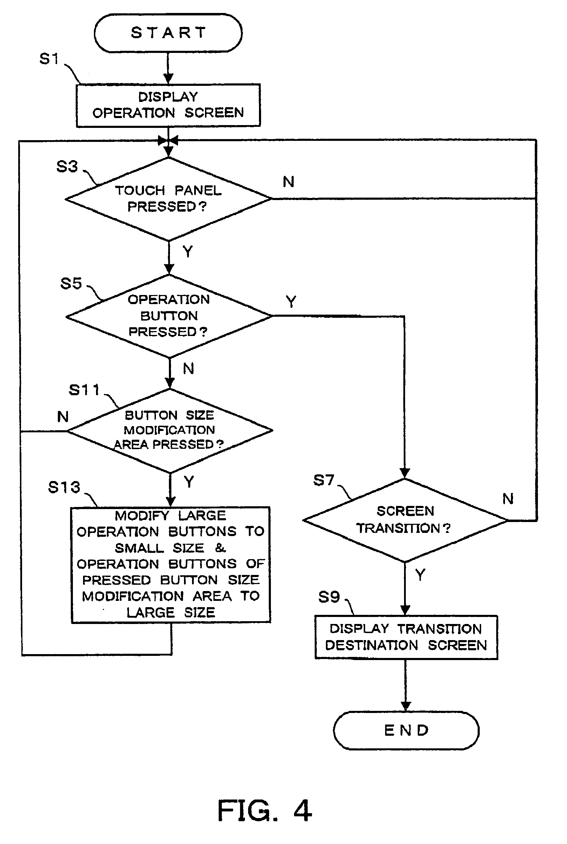

FIG. 4 is a flowchart showing a procedure for displaying the operation screen (51) in the navigation apparatus of the first embodiment. The computer program defining this procedure is read out from the recording medium (17) and executed by the control unit (5). Data used in creating image data for the operation screen (51) is also read out from the recording medium (17) and stored in the control unit (5).

When an operation button for instructing display of the operation screen (51) is pressed on a screen other than the operation screen (51), such as a button (57) shown on the guidance screen shown in FIG. 3, or when the power key included in the hardware keys (27) in FIG. 1 is pressed to start the navigation apparatus, the operation screen (51) in a default state (e.g., state shown in FIG. 2A) is displayed on the display unit (25) (S1). In step S1, the control unit (5) instructs the draw unit (21) to create image data for the operation screen (51) in the default state, and stores the state of the operation screen (51). The draw unit (21) creates image data for the operation screen (51) using image data (related to the background, constituent elements such as the operation buttons (61-69), etc.) sent from the control unit (5), and sends the image data to the display control unit (23). The display control unit (23) displays the operation screen (51) on the display unit (25) based on the created image data.

The control unit (5) determines whether the touch panel (29) has been pressed by periodically scanning the position detection unit (31) which outputs a signal showing the coordinate information of a position of the touch panel (29) that has been pressed (S3). When the touch panel (29) is pressed, a signal showing the coordinate information of the pressed position is sent via the interface (33), and the control unit (5) determines that the touch panel (29) has been pressed and stores the coordinate information of the pressed position.

If, in step S3, it is determined that the touch panel (29) has been pressed, the control unit (5) determines whether one of the operation buttons (61-69) or the operation button (53) has been selected, based on the coordinates of the pressed position and the settings of the effective coordinate areas corresponding to the current state of the operation screen (51)(S5). In the case where the coordinates of the pressed position are included in one of the effective coordinate areas provided respectively for the operation buttons (61-69) and the operation button (53), it is determined that the operation button corresponding to the effective coordinate area that includes the coordinates of the pressed position has been selected.

If, in step S5, it is determined that one of the operation buttons (61-69) or the operation button (53) has been selected, it is determined whether the operation instructed by the selected operation button requires screen transition of the display unit (25) (S7). For example, the operation instructed by the first button (61) and the operation button (53) is display of a guidance screen, which requires screen transition of the display unit (25). The operation instructed by the fourth button (64) is display of an input screen for an address search, which also requires screen transition of the display unit (25). If, in step S7, it is determined that the operation instructed by the selected operation button requires screen transition of the display unit (25), the control unit (5) performs processing to display the transition destination screen on the display unit (25) (S9). If, in step S7, it is determined that the operation instructed by the selected operation button does not require screen transition of the display unit (25), the control unit (5) executes the instructed operation and again executes the processing from step S3 onward. For example, if the seventh button (67) is selected, a search for a guidance route is again executed, with the operation screen (51) displayed on the display unit (25) without change.

If, in step S5, it is determined that one of the operation buttons (61-69) or the operation button (53) has not been selected, the control unit (5) determines whether one of the button size modification areas (71-73) has been selected, based on the coordinates of the pressed position and the settings of the effective coordinate areas corresponding to the current state of the operation screen (51)(S11). If the coordinates of the pressed position are included in one of the effective coordinate areas provided respectively for the button size modification areas (71-73) currently shown on the operation screen (51), it is determined that the button size modification area corresponding to the effective coordinate area that includes the coordinates of the pressed position has been selected.

If, in step S11, it is determined that one of the button size modification areas (71-73) currently shown on the operation screen (51) has not been selected, the control unit (5) continues the processing from step S3 onward, since the operation pressing the touch panel (29) is invalid.

If, in step S11, it is determined that one of the button size modification areas (71-73) currently shown on the operation screen (51) has been selected, the control unit (5) modifies the operation screen (51) (S13). At step 513, the draw unit (21), as a result of an instruction from the control unit (5), creates image data for the operation screen (51) in which those of the first to ninth buttons (61-69) that are shown in large size will be shown in small size, and those of the first to ninth buttons (61-69) that belong to the group corresponding to the pressed button size modification area (71-73) (i.e., shown in small size) will be shown in large size. The modified operation screen (51) is displayed on the display unit (25), based on this image data. After step S13, the processing of step S3 onward is executed, with the modified operation screen (51) displayed on the display unit (25). Note that in step S13, the control unit (5) modifies the stored state of the operation screen (51), and in the subsequently performed steps S5 and 511, the determinations are performed based on the settings of the effective coordinate areas related to the modified operation screen (51).

For example, if step S1 is executed, and the button size modification area (72) corresponding to the middle group is selected with the operation screen (51) in the state shown in FIG. 2A displayed on the display unit (25), steps S3, S5, S11 and S13 will be executed, and the operation screen (51) in the state shown in FIG. 2B will be displayed on the display unit (25). If the button size modification area (73) corresponding to the bottom group is then selected, steps S3, S5, S11 and S13 will be executed, and the operation screen (51) in the state shown in FIG. 2C will be displayed on the display unit (25). Even if, for example, the first button (61) is pressed with the operation screen (51) in any of the states shown in FIGS. 2A to 2C, steps S3, S5, S7 and S9 will be executed, and the guidance screen (55) shown in FIG. 3 will be displayed on the display unit (25).

In this embodiment, image data for the operation screen (51) in each of the states shown in FIGS. 2A to 2C is created by the draw unit (21), although image data may be stored in advance in the control unit (5) for each of these states of the operation screen (51), and modification of the operation screen (51) may be performed by reading out the image data stored in the control unit (5), and substituting the read image data for the image data stored in the display control unit (23).

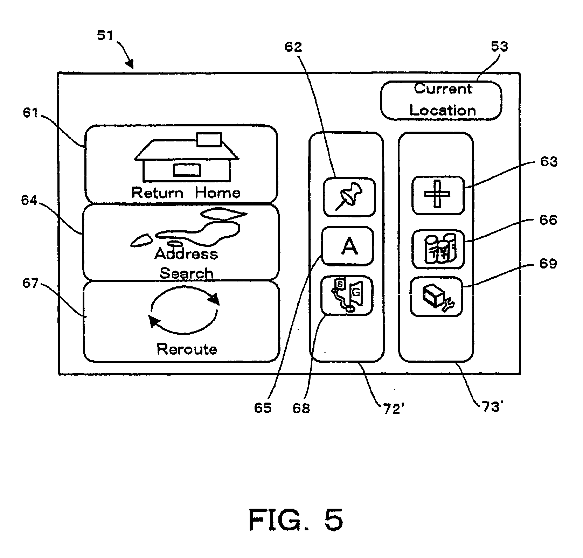

FIG. 5 is an illustrative view showing one of the states of the operation screen (51) displayed on the display unit (25) in the navigation apparatus of a second embodiment. While the first to ninth buttons (61-69) in the previous embodiment were divided into top, middle and bottom groups, in the second embodiment, the first to ninth buttons (61-69) are divided into three groups composed of a left column, a center column and a right column. The first button (61), the fourth button (64) and the seventh button (67) belong to the left group, the second button (62), the fifth button (65) and the eighth button (68) belong to the center group, and the third button (63), the sixth button (66) and the ninth button (69) belong to the right group.

Similarly to the previous embodiment, the operation buttons belonging to one of the groups are shown in large size on the operation screen (51) of the second embodiment, while the operation buttons belonging to the other groups are shown in small size. Also, button size modification areas corresponding to each of the groups whose operation buttons are shown in small size is shown on the operation screen (51). On the operation screen (51) in FIG. 5 are shown the operation buttons (61), (64) and (67) belonging to the left group in large size, and button size modification areas (72') and (73') corresponding respectively to the center and right groups whose operation buttons are shown in small size. The button size modification areas (72') and (73') are vertically long, substantially rectangular areas, with the operation buttons (62), (65) and (68) belonging to the center group disposed in proximity to the center of the button size modification area (72'), and the operation buttons (63), (66) and (69) belonging to the right group disposed in proximity to the center of the button size modification area (73').

If, for example, the button size modification area (72') corresponding to the center group is selected, the operation screen (51) is modified such that the operation buttons (61), (64) and (67) belonging to the left group are shown in small size in proximity to the center of a button size modification area (similar to the button size modification areas (72') and (73')) corresponding to the left group, and the operation buttons (62), (65) and (68) belonging to the center group are shown in large size like the operation buttons (61), (64) and (67) shown in FIG. 5.

The procedure for displaying the operation screen (51) in the navigation apparatus of the second embodiment is similar to the flowchart shown in FIG. 4. Other items related to the navigation apparatus of the second embodiment are similar to the navigation apparatus of the first embodiment, or can be readily derived from the description in this specification related to the navigation apparatus of the first embodiment.

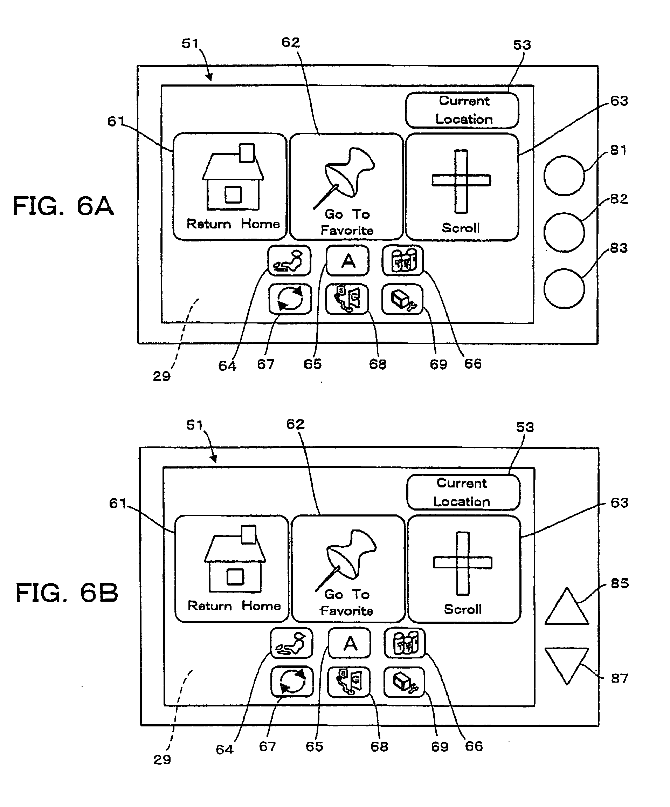

FIG. 6A is a front elevation view showing the front face of a navigation apparatus constituting a third embodiment of the present invention, and FIG. 6B is a front elevation view showing the front face of a navigation apparatus constituting a fourth embodiment of the present invention. While the operation screen (51) in the first and second embodiments is modified as a result of the button size modification areas (71-73), (72') and (73') being pressed, in the third and fourth embodiments, the operation screen (51) is modified as a result of hardware keys provided on the front face of the navigation apparatus being pressed. The operation screen (51) of these embodiments is similar to the first embodiment, except that button size modification areas (71-73) are not drawn.

In the third embodiment shown in FIG. 6A, selection buttons (81-83) for modifying the display size are provided for each of the three groups of operation buttons (61-69) composed of a top row, middle row and bottom row. If, for example, the selection button (81) is pressed, the operation screen (51) will be modified such that the operation buttons shown in large size will be shown in small size, and the operation buttons (61-63) belonging to the top group corresponding to the selection button (81) will be shown in large size. Similar processing is also performed in the case of the selection buttons (82) and (83) being pressed. Note that the operation screen (51) is not modified when the selection button (81), (82) or (83) corresponding to the group whose operation buttons are displayed in large size is pressed. Note also that the selection buttons (81), (82) and (83) are included in the hardware keys (27) in FIG. 1 (FIG. 6A does not show hardware keys other than the selection buttons (81-83)).

In the fourth embodiment shown in FIG. 6B, an up key (85) and a down key (87) for designating one of the three top, middle and bottom groups are provided. The designated group changes circularly from down to up when the up key (85) is pressed and from up to down when the down key (87) is pressed. On the operation screen (51), only the operation buttons belonging to the designated group are shown in large size. In FIG. 6B, the operation buttons (61-63) belonging to the top group are shown in large size. If, for example, the down key (87) is pressed in this state, the operation buttons (64-66) belonging to the middle group will change to the large size, and if the up key (85) is pressed, the operation buttons (67-69) belonging to the bottom group will change to the large size. Note that the up key (85) and the down key (87) are included in the hardware keys (27) in FIG. 1 (FIG. 6B does not shown hardware keys other than the up key (85) and the down key (87)). In the fourth embodiment, one hardware key that enables either the up direction or the down direction to be selectively designated may be used.

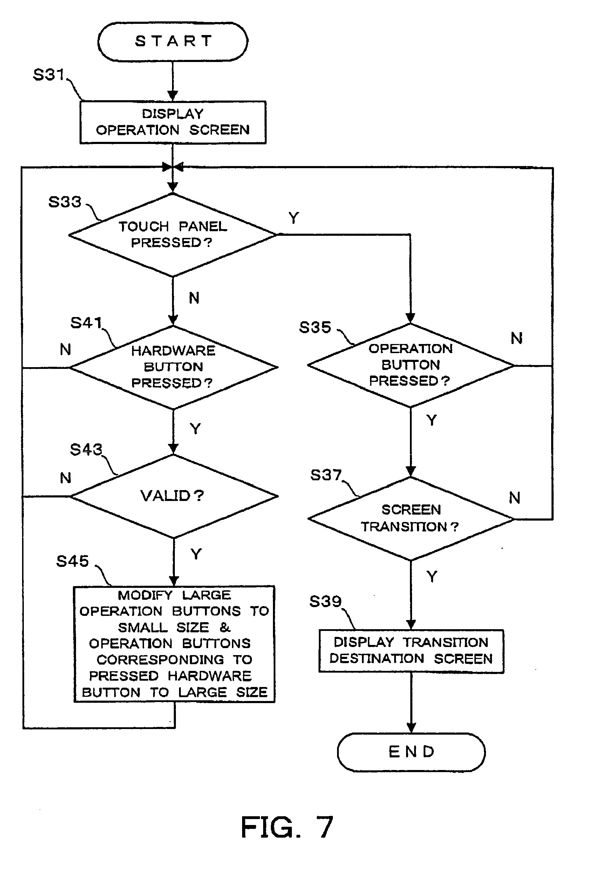

FIG. 7 is a flowchart showing a procedure for displaying the operation screen (51) in the navigation apparatus constituting the third embodiment. Steps S31 to S39 correspond respectively to steps S1 to S9 shown in FIG. 4, although in the case where it is determined in step S35 that one of the operation buttons has not been pressed, the processing of step S33 onward is executed. If it is determined in step S33 that the touch panel has not been pressed (i.e., if a signal showing the coordinate information of a pressed position was not obtained after the control unit (5) scanned the position detection unit (31)), the control unit (5) scans the selection buttons (81-83), and determines whether any one of the selection buttons (81-83) has been pressed, depending on whether there is a signal from the selection buttons (81-83) (S41). If, at step S41, a signal showing that one of the selection buttons (81-83) has been pressed is not sent to the control unit (5), the processing of step S33 onward is executed. If, at step S41, a signal showing that one of the selection buttons (81-83) has been pressed is sent to the control unit (5), the control unit (5) determines whether the operation pressing one of selection buttons (81-83) is valid (S43). If, at step S43, it is determined that the selection button (81-83) corresponding to the group whose operation buttons are shown in large size was pressed, the processing of step S33 onward is executed since the operation pressing the selection button is invalid. If, at step S43, it is determined that the selection button (81-83) corresponding to one of the groups whose operation buttons are shown in small size was pressed, the processing of step S45, which is similar to step S13 shown in FIG. 4, is executed, since the operation pressing the selection button (81-83) is valid.

The procedure for displaying the operation screen (51) in the navigation apparatus of the fourth embodiment can be understood as being the procedure shown in FIG. 7 excluding step S43. Other items related to the navigation apparatus of the third and fourth embodiments are similar to the navigation apparatus of the first embodiment, or can be readily derived from the description in this specification related to the navigation apparatus of the first embodiment. Note that modification of the size of the operation buttons (61-69) in the navigation apparatus of the second embodiment shown in FIG. 5 may be performed using hardware keys such as the selection buttons (81), (82) and (83) or the up key (85) and the down key (87) shown in FIG. 6A and 6B.

In the foregoing first to fourth embodiments, nine operation buttons (61-69) (whose display size changes) are drawn on a single operation screen (51), and are divided into three groups of three buttons. However, the number of operation buttons drawn on the operation screen (51), the number of groups, and the number of operation buttons belonging to each group are not particularly limited in the present invention. It is sufficient if there are two or more groups, and one or more operation buttons in each group. Also, the number of operation buttons belonging to each group does not need to be the same.

In the present invention, the design of the operation buttons (61-69) and the button size modification areas (71-73), (72') and (73') drawn on the operation screen (51) is not particularly limited, although the button size modification areas (71-73), (72') and (73') preferably are provided around the corresponding operation buttons, and the relation between the button size modification areas (71-73), (72') and (73') and the operation buttons (61-69) preferably is visually apparent. Also, a plurality of button size modification areas may be provided for each group of operation buttons (61-69).

In the foregoing first to fourth embodiments, the present invention is applied to a navigation apparatus, although the present invention is not limited to a navigation apparatus, and may be broadly applied to an electronic device provided with a GUI that uses a touch panel, such as a copier or a PDA. The touch panel apparatus in this specification includes electronic devices such as these having an operation means that uses a touch panel.

The foregoing embodiments have been described in order to describe the present invention, and should not be understood as limiting the invention disclosed in the claims or as restricting the scope of the claims. The constituent elements of the present invention are not limited to the foregoing embodiments, and can, of course, be modified within the technical scope disclosed in the claims.

## Claims

1. A touch panel apparatus for displaying an operation screen (51) that includes a plurality of operation buttons (61-69), and specifying a selected operation button using a touch panel (29), wherein
the plurality of operation buttons (61-69) are divided into a plurality of groups,
on the operation screen (51), one or more operation buttons (61-69) belonging to one of the groups are shown in a first size, one or more operation buttons (61-69) belonging to the other groups are shown in a second size that is smaller than the first size, and a button size modification area (71-73) is shown for each group in which the one or more operation buttons (61-69) belonging to the group are shown in the second size, and
when one of the button size modification areas (71-73) is selected, the operation screen (51) is displayed after being modified such that the one or more operation buttons (61-69) belonging to the group corresponding to the selected button size modification area (71-73) will be shown in the first size, and the one or more operation buttons (61-69) shown in the first size will be shown in the second size.

2. A touch panel apparatus comprising:
a draw unit (21) that creates image data for an operation screen (51) that includes a plurality of operation buttons (61-69);
a display unit (25) that displays the operation screen (51) using the image data; and
a control unit (5) that specifies a selected operation button (61-69) using a touch panel (29), and executes an operation corresponding to the selected operation button (61-69), wherein
the plurality of operation buttons (61-69) are divided into a plurality of groups,
on the operation screen (51), one or more operation buttons (61-69) belonging to one of the groups are shown in a first size, one or more operation buttons (61-69) belonging to the other groups are shown in a second size that is smaller than the first size, and a button size modification area (71-73) is shown for each group in which the one or more operation buttons (61-69) belonging to the group are shown in the second size, and
when one of the button size modification areas (71-73) is selected, the control unit (5) instructs the draw unit (21) to modify the image data, and the draw unit (21) modifies the image data such that the one or more operation buttons (61-69) belonging to the group corresponding to the selected button size modification area (71-73) will be shown in the first size, and the one or more operation buttons (61-69) shown in the first size will be shown in the second size.

3. A touch panel apparatus for displaying an operation screen (51) that includes a plurality of operation buttons (61-69), and specifying a selected operation button (61-69) using a touch panel (29), wherein
the plurality of operation buttons (61-69) are divided into a plurality of groups,
one or more hardware keys (81-83, 85, 87) are included for designating one of the plurality of groups,
on the operation screen (51), one or more operation buttons (61-69) belonging to one of the groups are shown in a first size, and one or more operation buttons (61-69) belonging to the other groups are shown in a second size that is smaller than the first size, and
when one of the one or more hardware keys (81-83, 85, 87) is pressed and one of the groups in which the one or more operation buttons (61-69) are shown in the second size is designated, the operation screen (51) is displayed after being modified such that the one or more operation buttons (61-69) belonging to the designated group will be shown in the first size, and the one or more operation buttons (61-69) shown in the first size will be shown in the second size.

4. The touch panel apparatus according to any one of claims 1 to 3, wherein an arrangement of the plurality of operation buttons (61-69) is the same irrespective of size.

5. The touch panel apparatus according to any one of claims 1 to 4, wherein when any of the plurality of operation buttons (61-69) is selected, an operation corresponding to the selected operation button (61-69) is performed irrespective of the size of the selected operation button (61-69).

6. An operation button display method of an electronic device for displaying an operation screen (51) that includes a plurality of operation buttons, and specifying a selected operation button (61-69) using a touch panel (29), comprising:
a step of displaying an operation screen (51) on which the plurality of operation buttons (61-69) are divided into a plurality of groups, one or more operation buttons (61-69) belonging to one of the groups are shown in a first size, one or more operation buttons (61-69) belonging to the other groups are shown in a second size that is smaller than the first size, and a button size modification area (71-73) is shown for each group in which the one or more operation buttons (61-69) belonging to the group are shown in the second size; and
a step of modifying the operation screen (51), when one of the button size modification areas (71-73) is selected, such that the one or more operation buttons (61-69) belonging to the group corresponding to the selected button size modification area (71-73) will be shown in the first size, and the one or more operation buttons (61-69) shown in the first size will be shown in the second size.

7. The method according to claim 6, wherein an arrangement of the plurality of operation buttons (61-69) is the same irrespective of size.

8. The method according to claim 6 or 7, further comprising a step in which, when any of the plurality of operation buttons (61-69) is selected, the electronic device performs an operation corresponding to the selected operation button (61-69) irrespective of the size of the selected operation button (61-69).
